(19) Europäisches Patentamt
European Patent Office
Office européen des brevets

(11) Publication number: **0 113 139**
**B1**

(12) **EUROPEAN PATENT SPECIFICATION**

(45) Date of publication of patent specification: **21.10.87**

(51) Int. Cl.[4]: **C 01 B 35/10,** C 01 F 11/22, C 01 B 33/18, C 01 B 35/06

(21) Application number: **83201691.9**

(22) Date of filing: **28.11.83**

(54) **Process for the preparation of boric acid as well as process for the preparation of silica using boric acid thus obtained.**

(30) Priority: **01.12.82 NL 8204651**

(43) Date of publication of application:
**11.07.84 Bulletin 84/28**

(45) Publication of the grant of the patent:
**21.10.87 Bulletin 87/43**

(84) Designated Contracting States:
**BE DE FR GB IT NL**

(56) References cited:
**US-A-2 789 884**

(73) Proprietor: **STAMICARBON B.V.**
**Mijnweg 1**
**NL-6167 AC Geleen (NL)**

(72) Inventor: **Spijker, Ruud**
**Rousselstraat 20**
**NL-1962 AJ Heemskerk (NL)**

(74) Representative: **Hoogstraten, Willem Cornelis Roeland et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 113 139 B1**

**Description**

The invention relates to a process for the preparation of pure silica by conversion of a solution of hexafluorosilicic acid with boric acid and separation of the precipitated silica.

Such a silica preparation, which is described, for instance, in US patent 2,799,559, is very attractive from a technical and economic point of view, because starting from the cheap, impure hexafluorosilicic acid, which is formed as by-product in the phosphoric acid and phosphate industry, a very pure, high-value silica product is obtained.

It is known (see Zeitschrift für Anorganische und Allgemeine Chemie, Band 300 (1959) pp. 152—158) that when boron trifluoride is mixed with calcium chloride dihydrate in an aqueous environment a reaction takes place in which boric acid is formed besides calcium fluoride and hydrochloric acid. This known conversion is applied as analytical method for boron trifluoride.

For technical preparation of boric acid, however, this known method is not suitable, particularly because the separation of boric acid from such a reaction mixture is a highly laborious operation. The reason is that, as has been found, the calcium fluoride formed is present in the form of an extremely fine precipitate, which can practically not be separated off (for instance by filtration). The separation of boric acid from a mixture containing hydrochloric acid also is a technically difficult method. Furthermore, such a reaction mixture is highly corrosive, leading to high costs of the separation equipment to be used. Finally, this known process has the disadvantage that the cost prices of the reactants used are relatively high.

In US—A—2 789 884 is disclosed the preparation of boric acid by reaction of an aqueous solution of a dimethyl ether complex of boron trifluoride with calcium carbonate at elevated temperature.

The present invention provides a cyclic process for the preparation of pure silica in which the above-mentioned disadvantages of the boric acid preparation are wholly or to a large extent eliminated.

According to the invention this is achieved by preparing pure silica by conversion of a solution of hexafluorosilicic acid with boric acid and separation of the precipitated silica whereby the fluoroboric acid solution resulting from the said conversion is reacted with calcium carbonate at elevated temperature to produce an aqueous solution of boric acid containing calcium fluoride precipitate, the calcium fluoride precipitate is removed and the remaining aqueous solution of boric acid is used for the conversion of the hexafluorosilicic acid.

The fluoroboric acid solution obtained as by-product in such a synthesis can according to the invention be converted into boric acid and calcium fluoride using calcium carbonate, and the boric acid thus formed can advantageously be utilized for the conversion of hexafluorosilicic acid.

In this way it is possible, starting from the by-product hexafluorosilicic acid, to prepare a very pure silica in a cyclic process, the required boric acid being regenerated *in situ* and, in addition, a cheap calcium carbonate being converted into the relatively high-value calcium fluoride.

The reactions occurring in such a cyclic process can be represented by the following reaction equations:

a) $$2H_2SiF_6+3H_3BO_3\rightarrow 3HBF_4+2SiO_2+5H_2O$$

b) $$3HBF_4+6CaCO_3+3H_2O\rightarrow 3H_3BO_3+6CaF_2+6CO_2$$

This results in the following gross reaction equation:

c) $$2H_2SiF_6+6CaCO_3\rightarrow 2SiO_2+6CaF_2+6CO_2+2H_2O$$

The silica obtained from raw, contaminated hexafluorosilicic acid in such a process appears to be very pure. Moreover, it has been found that a product is obtained with a very low content of metals if the silica is washed with a dilute fluoroboric acid solution. The wash liquor thus obtained can without any problems be added to the fluoroboric acid solution obtained in the conversion of $H_2SiF_6$, upon which the mixture is processed into boric acid and calcium fluoride in accordance with the invention.

When the process is carried out continuously it will of course be necessary to drain part of the metal-containing liquid at regular intervals so as to avoid metal accumulation.

The reaction of fluoroboric acid with calcium carbonate is preferably carried out at a temperature of between 50 and 90°C, for when lower temperatures are used the reaction proceeds extremely slowly, whereas at higher temperatures fluoroboric acid decomposes into gaseous borontrifluoride and hydrofluoric acid.

The concentration of the $HBF_4$ solution used does not appear to be critical. In general a 5—45 wt.-%, in particular a 10—20 wt.-% $HBF_4$ solution is used.

The calcium carbonate can be added in solid form. By preference a 10—30 wt.-% suspension of calcium carbonate in water is added, because it has been found that this yields a virtually quantitative conversion at a relatively short reaction time.

Though it is preferred to use calcium carbonate in the present process, in principle use may also be made of calcium hydroxide.

The amounts of fluoroboric acid and calcium carbonate may vary. By preference approximately

stoichiometric amounts are used, for when using a large excess of fluoroboric acid a proportion of non-converted fluoroboric acid remains, and it is rather difficult to separate this from the reaction mixture, and when a large excess of calcium carbonate is used, insoluble calcium borates are formed.

The calcium fluoride precipitate formed in the process can be separated from the liquid reaction mixture in various ways, for instance by centrifuging or decanting. By preference the calcium fluoride is separated by filtering, in particular by vacuum filtration. It has been found that the filtration of the precipitate, which has a relatively fine grain size, can be improved substantially if a small amount of a nonionogenic flocculant is added to the reaction mixture. Suitable flocculants include polyacrylamides, polyacrylonitriles, copolymers of acrylamides or acrylonitrile with acrylates or vinyl esters. As is common practice, the flocculant is added to the reaction mixture in the form of an aqueous solution, for instance a 0.1—5 wt.-% solution. The amount of flocculant to be added may vary within broad limits, for instance from 0.001 to 0.04 wt.-%, relative to the total weight of the reaction mixture.

The calcium fluoride separated off can be processed further in a way known *per se*, for instance by washing and drying. The product can be sold as such or be applied, for instance, as raw material for the preparation of hydrofluoric acid or other fluorine compounds.

The liquid reaction mixture remaining after separation of the calcium fluoride consists practically quantitatively of an aqueous solution of boric acid. From this, solid boric acid can be recovered in a way known *per se* by evaporation of the liquid. Of course it is also possible to recover the boric acid as a dilute or concentrated solution.

The invention will be elucidated in the following examples, without being restricted thereto.

Example I

500 g of a 15 wt.-% $HBF_4$ solution having a temperature of about 80°C was fed into a stirred reactor. Subsequently, 850 g of a 20 wt.-% suspension of $CaCO_3$ in water was added to the $HBF_4$ solution in approximately 2 hours' time, use being made of a peristaltic pump, after which 10.5 ml of a 0.2 wt.-% solution of a nonionogenic flocculant was supplied to the reaction mixture, which was meanwhile being stirred. As flocculant use was made of a product marketed under the name Hercofloc 527 N by Hercules.

The reaction mixture formed was subsequently vacuum-filtered through a glass filter and the filter cake was dried at 150°C. Via X-ray diffraction analysis it was demonstrated that the precipitate thus separated consisted practically quantitatively of $CaF_2$. The remaining filtrate was evaporated to dryness with the aid of a rotating film evaporator, the yield being 51.7 g of solid residue. X-ray diffraction analysis showed that the residue consisted of pure boric acid. The process efficiency was 98.5%.

Example II

480 g/hour of an $H_2SiF_6$ solution with a concentration of 18 wt.-% and 50 g/hour of solid $H_3BO_3$ were continuously and simultaneously fed to a stirred reactor. The $H_2SiF_6$ solution had been obtained by diluting a raw 35.8 wt.-% $H_2SiF_6$ solution from the evaporation section of a phosphate processing plant with demineralized water. The dilute solution has a fluorine and $P_2O_5$ content of 14.4 wt.-% and 0.23 wt.-% respectively and further contained, besides 330 ppm chlorine, substantial amounts of metals, such as 30 ppm Na, 223 ppm Ca, 64 ppm Fe, 16 ppm As. As boric acid use was made of the evaporated product obtained in Example I.

The residence time of the reactants in the reactor was about 1 hour, while the temperature was kept between about 80 and 85°C. The reaction mixture formed was subsequently filtered through a glass filter.

As filtrate an approximately 8.1 wt.-% $HBF_4$ solution was obtained, which could be concentrated with a rotating evaporator to a 34.5 wt.-% solution (temperature 40°C) and a 44.5 wt.-% solution (temperature 80°C).

Part of the filter cake obtained upon filtration, which contained 53.1 wt.-% moisture, was dried at 150°C. Via X-ray diffraction analysis the dried cake was demonstrated to consist of pure, amorphous $SiO_2$. The product was subsequently analysed. The results are summarized in Table I.

The remaining part of the filter cake was subjected to eleven washings on the filter, use being made of demineralized water, and was subsequently dried at 150°C.

The washed product was also analysed. The results are summarized in Table I.

Example III

The process of Example II was repeated, but this time the filter cake on the filter was first washed four times with a 1 wt.-% $HBF_4$ solution and subsequently eight times with demineralized water. The wash liquors were added to the filtrate, resulting in a decrease of the latter's concentration to about 7.2 wt.-% $HBF_4$. The washed product was analysed. The results are also summarized in Table I.

TABLE I

| | Unwashed product | Washed product Example II | Washed product Example III |
|---|---|---|---|
| Copper | 1.0 ppm | 0.310 ppm | <0.05 ppm |
| Nickel | 2.9 ppm | 0.020 ppm | <0.02 ppm |
| Chromium | 6.0 ppm | 0.014 ppm | 0.003 ppm |
| Cobalt | 0.02 ppm | <0.005 ppm | <0.001 ppm |
| Manganese | 0.7 ppm | 0.019 ppm | <0.019 ppm |
| Vanadium | 0.1 ppm | <0.1 ppm | <0.01 ppm |
| Iron | 41 ppm | 2 ppm | 0.53 ppm |

Example IV

The process of Example II was repeated, but this time a 37 wt.-% $H_2SiF_6$ solution was used. The $SiO_2$ obtained was practically equal to that of Example II. As filtrate a 14.7 wt.-% $HBF_4$ solution was obtained.

**Claims**

1. Process for the preparation of pure silica by conversion of a solution of hexafluorosilicic acid with boric acid and separation of the precipitated silica characterized in that the fluoroboric solution resulting from the said conversion is reacted with calcium carbonate at elevated temperature to produce an aqueous solution of boric acid containing calcium fluoride precipitate, the calcium fluoride precipitate is removed and the remaining aqueous solution of boric acid is used for the conversion of the hexafluorosilicic acid.

2. Process according to claim 1, characterized in that the reaction of calcium carbonate and the aqueous solution of fluoroboric acid is carried out at a temperature of between 50 and 90°C.

3. Process according to claim 1 or 2, characterized in that the calcium carbonate is added as a 10—30 wt.-% suspension.

4. Process according to any of claims 1—3, characterized in that the precipitated calcium floride is separated by vacuum filtration.

5. Process according to claim 4, characterized in that a nonionogenic flocculant is added to the reaction mixture prior to filtration.

6. Process according to any of claims 1—5, characterized in that the silica precipitate is washed with a solution of fluoroboric acid and the resultant acid wash liquor is added to the aqueous fluoroboric acid solution to be reacted with the calcium carbonate.

**Patentansprüche**

1. Verfahren zur Herstellung reiner Kieselsäure durch Umsetzung einer Lösung von Hexafluorkieselsäure mit Borsäure und Abtrennung der ausgefällten Kieselsäure, dadurch gekennzeichnet, daß die bei der genannten Umsetzung anfallende Fluoroborsäurelösung mit Kalziumcarbonat bei erhöhter Temperatur umgesetzt wird, um eine wässerige Lösung von Borsäure zu erhalten, die einen Kalziumfluoridniederschlag enthält, daß der Kalziumfluoridniederschlag abgetrennt wird und daß die wässerige Borsäurelösung zur Umsetzung der Hexafluorkieselsäure verwendet wird.

2. Verfahren nach Anspruch 1, dadurch gekennzeichnet, daß die Umsetzung des Kalziumcarbonats mit der wässerigen Fluoroborsäurelösung bei einer Temperatur zwischen 50 und 90°C durchgeführt wird.

3. Verfahren nach Anspruch 1 oder 2, dadurch gekennzeichnet, daß das Kalziumcarbonat als eine 10—30 Gew.-% Suspension zugesetzt wird.

4. Verfahren nach einem der Ansprüche 1—3, dadurch gekennzeichnet, daß das ausgefällte Kalziumfluorid durch Vakuumfiltration abgetrennt wird.

5. Verfahren nach Anspruch 4, dadurch gekennzeichnet, daß das Reaktionsgemisch vor der Filtration mit einem nichtionogenen Flockungsmittel versetzt wird.

6. Verfahren nach einem der Ansprüche 1—5, dadurch gekennzeichnet, daß der Kieselsäureniederschlag mit einer Fluoroborsäurelösung gewaschen und die resultierende saure Waschlösung zur wässerigen Fluoroborsäurelösung zugesetzt wird, um mit dem Kalziumcarbonat umgesetzt zu werden.

**Revendications**

1. Procédé de préparation de silice pure par conversion d'une solution d'acide hexafluorosilicique avec de l'acide borique et séparation de la silice précipitée, caractérisé en ce qu'on fait réagir la solution de l'acide fluoroborique provenant de ladite conversion avec du carbonate de calcium à une température élevée pour donner une solution aqueuse d'acide borique contenant un précipité de fluorure de calcium, on enlève le précipité de fluorure de calcium et on utilise la solution aqueuse restante d'acide borique pour la conversion de l'acide hexafluorosilicique.

2. Procédé selon la revendication 1, caractérisé en ce qu'on effectue la réaction du carbonate de calcium et de la solution aqueuse d'acide fluoroborique à une température comprise entre 50 et 90°C.

3. Procédé selon la revendication 1 ou 2, caractérisé en ce qu'on ajoute le carbonate de calcium sous forme d'une suspension de 10 à 30% en poids.

4. Procédé selon l'une quelconque des revendications 1 à 3, caractérisé en ce qu'on sépare le fluorure de calcium précipité par filtration sous vide.

5. Procédé selon la revendication 4, caractérisé en ce qu'on ajoute au mélange de réaction avant la filtration un floculant non ionogène.

6. Procédé selon l'une quelconque des revendications 1 à 5, caractérisé en ce qu'on lave le précipité de silice avec une solution d'acide fluoroborique et on ajoute la liqueur de lavage acide résultante à la solution aqueuse d'acide fluoroborique en vue d'une réaction avec le carbonate de calcium.